# EUROPÄISCHE PATENTSCHRIFT

(11) **EP 1 287 278 B1**
(45) Veröffentlichungstag und Bekanntmachung des Hinweises auf die Patenterteilung: **21.01.2004**
(21) Anmeldenummer: 01927610.4
(22) Anmeldetag: 24.03.2001
(51) Int. Cl.: F16K 31/06, F16K 31/00

(54) **VENTIL ZUM STEUERN VON FLÜSSIGKEITEN**
FLUID CONTROL VALVE
SOUPAPE POUR LA REGULATION DE LIQUIDES

(30) Priorität: 16.05.2000 DE 10023952
(43) Veröffentlichungstag der Anmeldung: 05.03.2003
(73) Patentinhaber: ROBERT BOSCH GMBH, 70442 Stuttgart (DE)
(72) Erfinder: STOECKLEIN, Wolfgang, 70176 Stuttgart (DE); SCHMIEDER, Dietmar, 71706 Markgroeningen (DE)
(86) Internationale Anmeldenummer: PCT/DE2001/001161
(87) Internationale Veröffentlichungsnummer: WO 2001/088421

(56) Entgegenhaltungen:
- DE-A- 19 743 669
- US-A- 4 298 181
- US-A- 4 610 426
- US-A- 4 690 465
- US-A- 5 340 081
- US-A- 5 517 972
- US-A- 5 544 815
- US-A- 5 593 134
- US-A- 5 630 440
- US-A- 5 961 045

## Beschreibung

### Stand der Technik

Die vorliegende Erfindung betrifft ein Ventil zum Steuern von Flüssigkeiten gemäß dem Oberbegriff des Patentanspruchs 1.

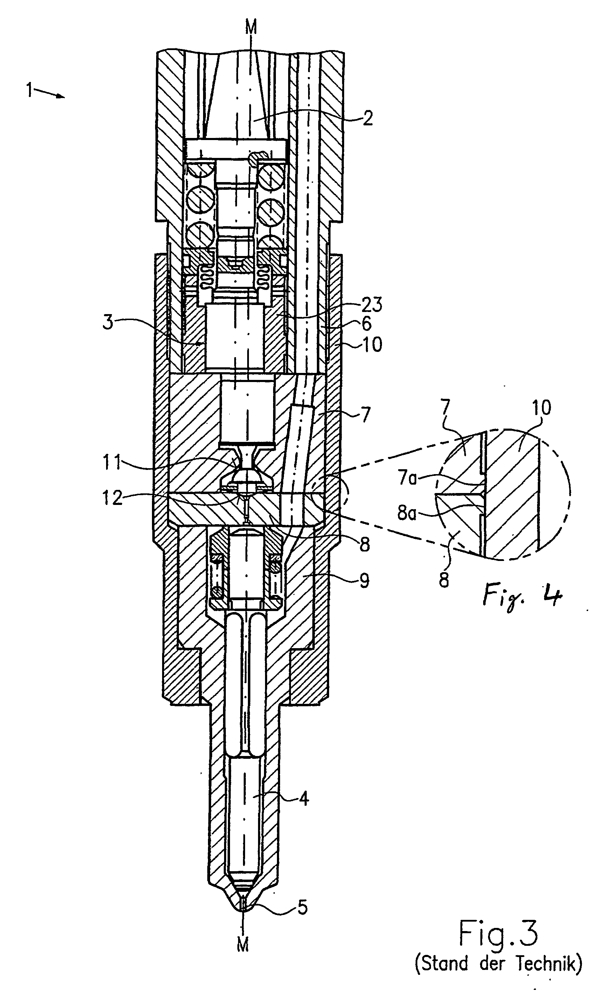

Ventile zum Steuern von Flüssigkeiten sind in verschiedensten Ausgestaltungen bekannt. Beispielsweise ist in den Figuren 3 und 4 ein Ventil zum Steuern von Flüssigkeiten dargestellt, welches ein Ventilglied 4 aufweist, das über einen Piezoaktor 2 und einen hydraulischen Übersetzer 3 betätigbar ist. Weiter umfaßt das Ventil einen Halter 6, ein Ventilstück 7, eine Zwischenscheibe 8 und einen Düsenkörper 9. Wie in Figur 3 gezeigt, ist hierbei der hydraulische Übersetzer teilweise im Halter 6, im Ventilstück 7 und der zwischenscheibe 8 versetzt zu einer Mittelachse M-M des Ventils angeordnet. Weiter weist der hydraulische Übersetzer 3 einen ersten Sitz 11 sowie einen zweiten Sitz 12 auf. Ein Zylinder des hydraulischen Übersetzers ist in einem Körper 23 angeordnet. Wie weiter aus Figur 3 ersichtlich ist, ist auch der Piezoaktor 2 versetzt zur Mittellinie M-M angeordnet. Die Einzelteile des Ventils 1, d.h. der Halter 6, das Ventilstück 7, die Zwischenscheibe 8 und der Düsenkörper 9, werden durch eine Düsenspannmutter 10 miteinander befestigt. Hierbei weist die Düsenspannmutter 10 an ihrem unteren Bereich ein Gewinde auf, welches in ein am Halter 6 vorgesehenes Gewinde eingeschraubt wird.

Um eine zuverlässige Funktion des Ventils 1 sicherzustellen, müssen die Einzelteile 6, 7, 8, 9 zueinander jeweils eine genaue Lageorientierung aufweisen. Daher werden vor dem Anbringen der Düsenspannmutter 10 der Halter 6 und das Ventilstück 7 durch zwei Paßstifte miteinander verbunden. Das Ventilstück 7 und die Zwischenscheibe 8 werden ebenfalls mit einem Paßstift miteinander verbunden. Um die Einzelteile durch die Düsenspannmutter 10 zentrieren zu können, sind, wie in Figur 4 gezeigt, an dem Ventilstück 7 und der Zwischenscheibe 8 jeweils Zentrierringe 7a, 8a für eine radiale Zentrierung dieser Teile vorgesehen. Ihre Winkellage zueinander wird somit durch die radiale Zentrierung durch die Düsenspannmutter 10 (vgl. Figur 4) sichergestellt, um insbesondere am ersten Sitz 11 und am zweiten Sitz 12 eine sehr genaue radiale Ausrichtung zu erhalten. Weiter werden die Zwischenscheibe 8 und der Düsenkörper 9 ebenfalls mittels zweiter Paßstifte miteinander verbunden. Anschließend werden die Einzelteile durch die Düsenspannmutter 10 miteinander verspannt.

Diese Montage der Einzelteile ist jedoch sehr aufwendung und sehr teuer. Weiterhin kann durch große Toleranzen bzw. durch einen Verzug beim Anziehen der Düsenspannmutter 10 insbesondere zwischen dem Ventilstück 7 und der Zwischenscheibe 8 eine ungenaue radiale Zentrierung auftreten. Auch muß aufgrund der Düsenspannmutter der Piezoaktor 2 außermittig von der Mittellinie M-M eingebaut werden.

### Vorteile der Erfindung

Das erfindungsgemäße Ventil zum Steuern von Flüssigkeiten mit den Merkmalen des Hauptanspruchs hat demgegenüber den Vorteil, daß auf eine Düsenspannmutter zur Verspannung der Einzelteile verzichtet werden kann. Das Ventilstück, die Zwischenscheibe und der Düsenkörper werden durch mindestens zwei Schrauben miteinander verbunden. Dabei sind die Schrauben radial zur Mittelachse des Ventils angeordnet. Dadurch ist auch eine zentrische Anordnung des Piezoelementes möglich. Im Vergleich zum Stand der Technik kann der im Halter angeordnete Körper zur Aufnahme eines Teils des hydraulischen Übersetzers in das Ventilstück integriert werden, so daß die Anzahl von Bauteilen verringert werden kann. Weiterhin wird eine gute radiale Zentrierung der Zwischenscheibe zum Ventilstück bereitgestellt, ohne daß zusätzliche Bearbeitungen der beiden Einzelteile notwendig sind. Dadurch wird auch die Winkeltoleranz zwischen Spritzlöchern und Spannflächen des Halters verkleinert. Überdies ermöglicht das erfindungsgemäße Ventil die Bereitstellung eines größeren Bauraums für das Ventilglied, so daß eine optimale Anordnung des Ventilglieds möglich ist. Auch können die Schrauben im Vergleich zu der Düsenspannmutter im Stand der Technik mit größeren Anzugskräften befestigt werden, ohne daß dadurch nachteilige Auswirkungen auf die Lagegenauigkeit der Einzelteile des Ventils ausgeübt werden.

Gemäß einer bevorzugten Ausgestaltung der vorliegenden Erfindung ist zusätzlich auch der Halter mit dem Ventilstück, der Zwischenscheibe und dem Düsenkörper über die Schrauben verbunden.

Gemäß einer anderen vorteilhaften Ausgestaltung der Erfindung ist der Halter mit dem Ventilstück mittels Schweißen verbunden. Hierdurch ergibt sich insbesondere im Halter ein größerer Bauraum für die darin aufzunehmenden Einzelteile des Ventils. Weiter können auch Schrauben mit einem größeren Durchmesser verwendet werden. Daher kann eine größere Vorspannkraft mittels der Schrauben ausgeübt werden und die Anzahl der Schrauben verringert werden.

Gemäß der Erfindung ist der Piezoaktor zentrisch im Ventil angeordnet. Dadurch ergibt sich ein besonders einfacher Aufbau des erfindungsgemäßen Ventils.

Gemäß der Erfindung ist auch der hydraulische Übersetzer im Ventil zentrisch angeordnet. Dies ermöglicht insbesondere eine Vereinfachung der radialen Ausrichtung zwischen dem ersten und dem zweiten Sitz.

Um eine verdeckte Anordnung des Kopfes der Schraube zu ermöglichen, ist vorzugsweise eine Aussparung im Düsenkörper oder im Halter oder dem Ventilstück vorgesehen.

Zum radialen Abdichten vom Düsenkörper zum Motor ist vorteilhaft eine Scheibe angeordnet.

### Zeichnung

Zwei Ausführungsbeispiele der Erfindung sind in der Zeichnung dargestellt und werden in der nachfolgenden Beschreibung näher erläutert.
Figur 1 zeigt ein Ventil zum Steuern von Flüssigkeiten gemäß einem ersten Ausführungsbeispiel der vorliegenden Erfindung,
Figur 2 zeigt ein Ventil zum Steuern von Flüssigkeiten gemäß einem zweiten Ausführungsbeispiel der vorliegenden Erfindung,
Figur 3 zeigt ein Ventil zum Steuern von Flüssigkeiten gemäß dem Stand der Technik und
Figur 4 zeigt eine vergrößerte Darstellung eines Ausschnitts des in Figur 3 dargestellten Ventils.

### Beschreibung der Ausführungsbeispiele

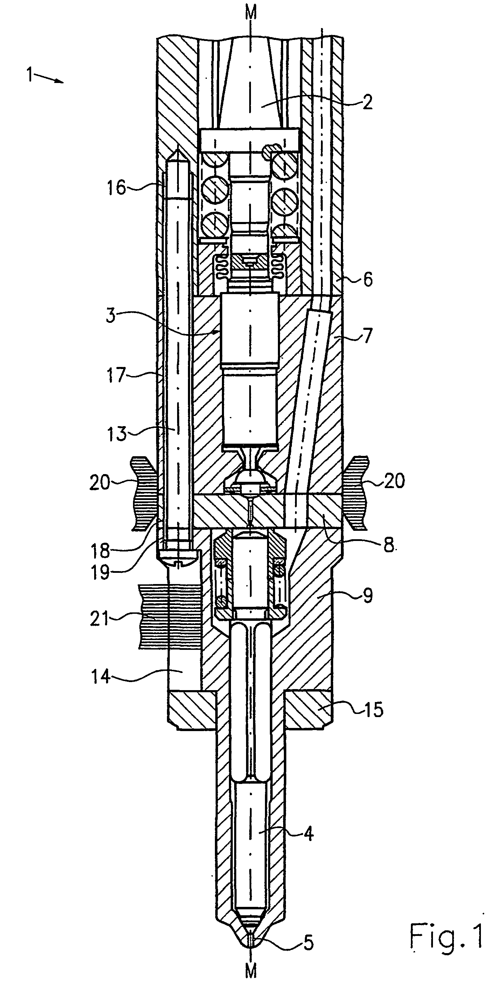

In Figur 1 ist ein erstes Ausführungsbeispiel eines Ventils zur Steuerung von Flüssigkeiten gemäß der vorliegenden Erfindung dargestellt.

Wie in Figur 1 gezeigt, umfaßt das Ventil 1 ein Ventilglied 4, welches über einen Piezoaktor 2 sowie einen hydraulischen Übersetzer 3 betätigbar ist. Das Ventilglied 4 schließt und öffnet eine Einlaßöffnung 5, durch welche Kraftstoff in eine Brennkammer zugeführt wird.

Wie in Figur 1 gezeigt, umfaßt das Ventil 1 einen Halter 6, ein Ventilstück 7, eine Zwischenscheibe 8 und einen Düsenkörper 9, in welchem das Ventilglied 4 angeordnet ist. Der Halter 6, das Ventilstück 7, die Zwischenscheibe 8 und der Düsenkörper 9 werden durch zwei Schrauben 13 miteinander verbunden. Zur besseren Darstellbarkeit des Ventils 1 ist in Figur 1 nur eine Schraube 13 dargestellt. Genauer ist im Halter 6 eine mit einem Gewinde versehene Bohrung 16, im Ventilstück 7 eine Bohrung 17, im Zwischenstück 8 eine Bohrung 18 und im Düsenkörper 9 eine Bohrung 19 vorgesehen, welche jeweils die Schraube 13 aufnehmen.

Um ein einfacheres Einschrauben der Schraube 13 zu ermöglichen, ist am Düsenkörper 9 eine Aussparung 14 vorgesehen, welche durch eine Scheibe 15 abgedeckt ist.

Wie in Figur 1 gezeigt ist der Piezoaktor 2 sowie der hydraulische Übersetzer 3 zentrisch auf einer Mittellinie M-M des Ventils 1 angeordnet. Dadurch ergibt sich ein einfacher Aufbau des erfindungsgemäßen Ventils 1 und es ergibt sich mehr Spielraum für die Anordnung von z.B. Kraftstoffzuleitungen oder weiteren Einrichtungen des Ventils.

In Figur 1 sind weiter zwei Zentrierwerkzeuge 20 und 21 dargestellt, welche bei der Montage des Ventils 1 verwendet werden. Dabei wird das Ventilstück 7 zur Zwischenscheibe 8 mittels des Zentrierwerkzeugs 20 radial zentriert. Weiter wird die Winkellage des Düsenkörpers 9 zum Halter 6 durch das Zentrierwerkzeug 21 eingestellt. Anschließend werden die Schrauben 13 eingeführt und angezogen. Somit ermöglicht der erfindungsgemäße Aufbau des Ventils auch eine schnelle und kostengünstige Montage ohne die Verwendung von teuren Paßstiften.

Wie in Figur 1 gezeigt, wird im vorliegenden Ausführungsbeispiel die Schraube 13 ausgehend vom Düsenkörper 9 in Richtung des Halters 6 eingeführt. Es ist jedoch auch denkbar, daß die Schraube 13 ausgehend vom Halter 6 zum Düsenkörper 9 eingeführt wird. Hierzu müssten entsprechende Aussparungen am Halter 6 vorgesehen werden.

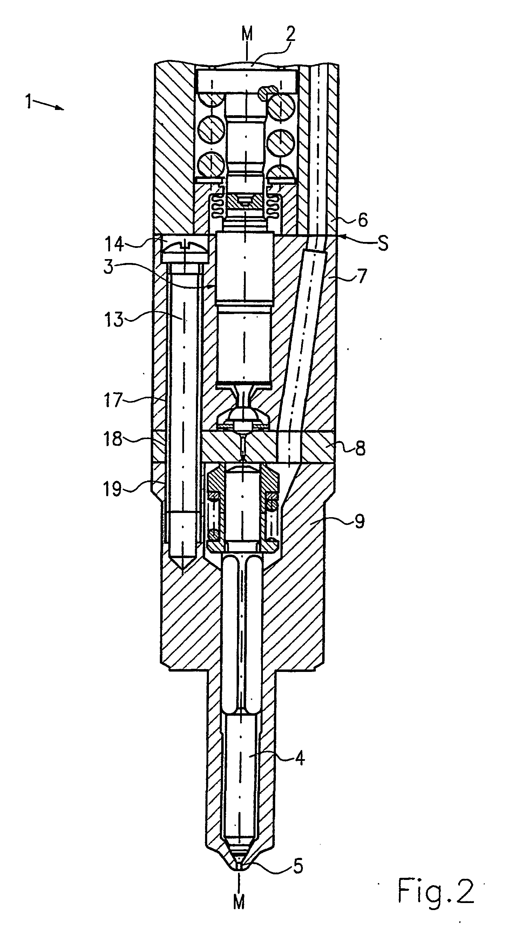

In Figur 2 ist ein zweites Ausführungsbeispiel eines Ventils zum Steuern von Flüssigkeiten gemäß der vorliegenden Erfindung dargestellt. Gleiche Teile sind mit den gleichen Bezugszeichen wie im ersten Ausführungsbeispiel bezeichnet.

Wie in Figur 2 gezeigt, umfaßt das Ventil 1 ebenfalls einen Halter 6, ein Ventilstück 7, eine Zwischenscheibe 8 und einen Düsenkörper 9. Im Unterschied zum ersten Ausführungsbeispiel sind jedoch beim zweiten Ausführungsbeispiel nur das Ventilstück 7, die Zwischenscheibe 8 und der Düsenkörper 9 durch Schrauben 13 miteinander verbunden. Wie im ersten Ausführungsbeispiel ist in Figur 2 ebenfalls nur eine Schraube 13 dargestellt. Die Schraube 13 ist von der zum Halter 6 gerichteten Seite des Ventilstücks 7 her eingeführt und wird durch eine Bohrung 17 im Ventilstück 7, eine Bohrung 18 in der Zwischenscheibe 8 und eine Sacklochbohrung 19 im Düsenkörper 9 geführt. Der Kopf der Schraube 13 ist in einer im Ventilstück 7 gebildeten Aussparung 14 versenkt. Somit stellen die Schrauben 13 die kritische Lageorientierung des Ventilstücks 7 zur Zwischenscheibe 8 bzw. zum Düsenkörper 9 sicher.

Das Ventilstück 7 ist durch eine Schweißung S mit dem Halter 6 verbunden. Eine Verbindung kann jedoch auch durch eine Verschraubung oder eine Verschaubung und eine zusätzliche Verschweißung ausgebildet sein. Somit wird bei der Montage des Ventils 1 gemäß dem zweiten Ausführungsbeispiels zuerst das Ventilstück 7, die Zwischenscheibe 8, der Düsenkörper 9 über die Schrauben 13 miteinander verbunden und anschließend wird das Ventilstück 7 mit dem Halter 6 verschweißt. Dies ermöglicht es, daß Schrauben 13 mit einem größeren Durchmesser verwendet werden können. Dadurch kann eine größere Vorspannkraft ausgeübt werden und die Zahl der Schrauben reduziert werden. Weiterhin kann auch die relativ aufwendige Bearbeitung des Düsenkörpers 9 zur Herstellung der Aussparung 14 sowie auf die Scheibe 15 zur Abdeckung der Schraube 13 verzichtet werden. Im zweiten Ausführungsbeispiel ist, wie in Figur 2 gezeigt, die Schraube 13 durch den Halter 6 abgedeckt.

Zusammenfassend wurde insoweit ein Ventil zum Steuern von Flüssigkeiten beschrieben, welches ein über einen Piezoaktor 2 und einen hydraulischen Übersetzer 3 betätigbares Ventilglied 4 umfaßt. Weiter umfaßt das Ventil einen Halter 6, ein Ventilstück 7, eine Zwischenscheibe 8 und einen Düsenkörper 9. Das Ventilstück 7, die Zwischenscheibe 8 und der Düsenkörper 9 sind über mindestens zwei Schrauben 13 miteinander verbunden, wobei die Schrauben. 13 radial zu einer Mittelachse M-M des Ventils angeordnet sind. Dies ermöglicht einen einfachen Aufbau des Ventils sowie eine kostengünstige Montage.

## Patentansprüche

1. Ventil zum Steuern von Kraftstoff in eine Brennkammer mit einem eine Einlaßöffnung (5) steuernden Ventilglied (4)
- einem Halter (6)
- einem Ventilstück (7) und
- einem Düsenkörper (9),
**dadurch gekennzeichnet, daß** im Düsenkörper (9) das Ventilglied (4), im Ventilstück (7) ein hydraulischer Übersetzer und zwischen Düsenkörper und Ventilstück eine Zwischenscheibe (8) angeordnet sind und das Ventilglied durch einen Piezoaktor über dem hydraulischen Übersetzer im Ventilstück betätigt wird, wobei der Piezoaktor und der hydraulischer Übersetzer zentrisch zur Mittelachse des Ventil angeordnet sind und der Düsenkörper (9), die Zwischenscheibe und das Ventilstück über mindestens zwei radial zu einer Mittelachse (M-M) des Ventils angeordnete Schrauben (13) mit einander verbunden sind.

2. Ventil zum Steuern von Flüssigkeiten nach Anspruch 1, **dadurch gekennzeichnet, daß** das Ventilstück (7), die Zwischenscheibe (8), der Düsenkörper (9) und der Halter (6) durch Schrauben (13) miteinander verbunden sind.

3. Ventil zum Steuern von Flüssigkeiten nach Anspruch 1, **dadurch gekennzeichnet, daß** der Halter (6) mit dem Ventilstück (7) mittels Schweißen verbunden ist.

4. Ventil zum Steuern von Flüssigkeiten nach einem der Ansprüche 1 bis 3, **dadurch gekennzeichnet, daß** eine Aussparung (14) zur Aufnahme eines Kopfes der Schraube (13) vorgesehen ist.

5. Ventil zum Steuern von Flüssigkeiten nach einem der Ansprüche 1 bis 4, **dadurch gekennzeichnet, daß** weiter eine Scheibe (20) vorgesehen ist, um die Schraube (13) abzudecken.

## Claims

1. Valve for controlling fuel into a combustion chamber having a valve element (4) which controls an inlet opening (5),
- a holder (6)
- a valve element (7), and
- a nozzle body (9),
**characterized in that** the valve component (4) is arranged in the nozzle body (9), a hydraulic pressure intensifier is arranged in the valve element (7), and a washer (8) is arranged between the nozzle body and the valve element, and the valve element is activated by means of a piezoactuator using the hydraulic pressure intensifier in the valve element, the piezoactuator and the hydraulic pressure intensifier being arranged centrally with respect to the centre axis of the valve, and the nozzle body (9), the washer and the valve element being connected to one another via at least two screws (13) which are arranged radially with respect to a centre axis (M-M) of the valve.

2. Valve for controlling fluids according to Claim 1, **characterized in that** the valve component (7), the washer (8), the nozzle body (9) and the holder (6) are connected to one another by means of screws (13).

3. valve for controlling fluids according to Claim 1, **characterized in that** the holder (6) is connected to the valve element (7) by means of welding.

4. Valve for controlling fluids according to one of Claims 1 to 3, **characterized in that** a recess (14) is provided for receiving a head of the screw (13).

5. Valve for controlling fluids according to one of Claims 1 to 4, **characterized in that** in addition a disc (20) is provided for covering the screw (13).

## Revendications

1. Injecteur pour commander l'alimentation en carburant d'une chambre de combustion comprenant un organe de soupape (4) commandant un orifice d'entrée (5),
- un support (6),
- une partie d'injecteur (7) et
- un corps d'injecteur (9),
**caractérisé en ce que**
le corps d'injecteur (9) reçoit l'organe de soupape (4), la partie d'injecteur (7) comporte le convertisseur hydraulique et entre le corps d'injecteur et la partie d'injecteur, on a un disque intermédiaire (8) et l'organe de soupape est actionné par un actionneur piézo-électrique avec interposition d'un convertisseur hydraulique dans la partie d'injecteur, l'actionneur piézo-électrique et le convertisseur hydraulique étant centrés par rapport à l'axe de l'injecteur, et le corps d'injecteur (9), le disque intermédiaire et la partie d'injecteur sont reliés par au moins deux vis (13) disposées radialement par rapport à l'axe (M-M) de l'injecteur.

2. Injecteur pour commander l'alimentation en carburant selon la revendication 1,
**caractérisé en ce que**
la partie d'injecteur (7), le disque intermédiaire (8), le corps d'injecteur (9) et le support (6) sont réunis par des vis (13).

3. Injecteur pour commander l'alimentation en carburant selon la revendication 1,
**caractérisé en ce que**
le support (6) est relié à la partie d'injecteur (7) par soudure.

4. Injecteur pour commander l'alimentation en carburant selon l'une des revendications 1 à 3,
**caractérisé par**
une cavité (14) pour recevoir la tête de la vis (13).

5. Injecteur pour commander l'alimentation en carburant selon l'une des revendications 1 à 4,
**caractérisé en ce qu'**
il est en outre prévu une rondelle (20) pour couvrir la vis (13).
